# EUROPÄISCHE PATENTANMELDUNG

(11) **EP 1 486 400 A2**
(43) Veröffentlichungstag der Anmeldung: **15.12.2004**
(21) Anmeldenummer: 04009917.8
(22) Anmeldetag: 27.04.2004
(51) Int. Cl.: B62D 13/06

(54) **Steuerungssystem für ein Fahrzeug**

(30) Priorität: 19.05.2003 DE 10322828
(71) Anmelder: DaimlerChrysler AG, 70567 Stuttgart (DE)
(72) Erfinder: Gehring, Ottmar, 70374 Stuttgart (DE); Heilmann, Harro, 73760 Ostfildern (DE); Schwarzhaupt, Andreas, 74420 Oberrot (DE); Spiegelberg, Gernot, 71296 Heimsheim (DE); Sulzmann, Armin, 68723 Oftersheim (DE)

(57) **Zusammenfassung**

Die vorliegende Erfindung betrifft ein Steuerungssystem (19) für ein Gespann aus einem Zugfahrzeug und einem Anhänger, wobei das Zugfahrzeug mit einem elektronisch ansteuerbaren Antriebsstrang (20) ausgestattet ist. Ein Anhängerlenkwinkel-Istwertgeber 13 ermittelt einen Ist-Anhängerlenkwinkel (ALW-IST) einer zur Lenkung des Anhängers dienenden Radachse. Der Fahrzeugführer kann über einen Anhängerlenkwinkel-Sollwertgeber (32) einen Soll-Anhängerlenkwinkel (ALW-SOLL) eingeben. Zur Vereinfachung der Rückwartsfahrt des Gespanns ist eine Rückfahreinrichtung (30) vorgesehen, die aus dem Ist-Anhängerlenkwinkel (ALW-IST) und dem Soll-Anhängerlenkwinkel (ALW-SOLL) einen modifizierten Soll-Zugfahrzeuglenkwinkel (ZLW-SOLL') einer zur Lenkung des Zugfahrzeug dienenden Radachse ermittelt, der im Aktivzustand der Rückfahreinrichtung in einem modifizierten Bewegungsvektor (BV') an die Stelle des tatsächlichen Soll-Zugfahrzeuglenkwinkels (ZLW-SOLL) tritt und der bei Fahrt des Gespanns den Ist-Anhängerlenkwinkel (ALW-IST) in den Soll-Anhängerlenkwinkel (ALW-SOLL) überführt, wenn der modifizierte Bewegungsvektor (BV') abgearbeitet wird.

## Beschreibung

Die Erfindung betrifft ein Steuerungssystem für ein Fahrzeug mit den Merkmalen des Oberbegriffs des Anspruchs 1.

Aus der DE 100 32 179 A1 ist ein Steuerungssystem dieser Art bekannt, bei dem das Fahrzeug mit einem elektronisch ansteuerbaren Antriebsstrang ausgestattet ist. Dieser Antriebsstrang umfasst zumindest eine Lenkungsanlage, eine Bremsanlage und ein Antriebsaggregat. Derartige Steuerungssysteme für Fahrzeuge mit elektronisch ansteuerbarem Antriebsstrang werden auch als Drive-by-Wire-Systeme oder als X-by-Wire-Systeme bezeichnet. Bei solchen Systemen können Lenkungsanlage, Bremsanlage und Antriebsaggregat des Fahrzeugs elektronisch gesteuert werden, ohne dass zwischen entsprechenden Bedienelementen, wie Lenkrad, Bremspedal und Gaspedal, und der jeweiligen Antriebsstrang-Komponente eine durchgehende mechanische oder hydraulische Verbindung besteht.

Das Steuerungssystem umfasst eine fahrzeugfeste Bedieneinrichtung, in die ein Fahrzeugführer über entsprechende Bedienelemente, wie Lenkrad, Bremspedal, Gaspedal, einen Fahrerwunsch eingibt und die aus diesem Fahrerwunsch einen standardisierten Bewegungsvektor generiert. Dieser Bewegungsvektor entspricht dabei beispielsweise einem Bus-Protokoll insbesondere einem CAN-Protokoll. Diese Bedieneinrichtung bildet somit eine Eingabeebene für Vorgaben (Fahrerwünsche) die vom Antriebsstrang abgearbeitet werden sollen.

Das Steuerungssystem umfasst außerdem eine Steuereinrichtung, die aus einem eingangsseitigen Bewegungsvektor ausgangsseitig Steuersignale zum Ansteuern des Antriebsstrangs generiert. Diese Steuersignale werden dann an den Antriebsstrang übermittelt und von diesem zur Umsetzung des Fahrerwunsches abgearbeitet. Diese Steuereinrichtung bildet somit eine Koordinationsebene, die das Umsetzen der standardisierten Sollsignale (Fahrerwunsch) am Antriebsstrang ermöglicht.

Bei einem Gespann aus Zugfahrzeug und Anhänger ist das Rangieren, insbesondere das Rückwärtsfahren, aufgrund der komplexen Kinematik zwischen Zugfahrzeug und Anhänger vergleichsweise schwierig und auch von einem erfahrenen Fahrzeugführer nur mit einem vergleichsweise großen Zeitaufwand durchführbar. Bei einem solchen Gespann handelt es sich um ein mehrgliedriges Fahrzeug, das zwei gelenkte Radachsen, je eine für das Zugfahrzeug und für den Anhänger, aufweist, wodurch die kinematische Kopplung zwischen Zugfahrzeug und Anhänger für die Rückwärtsfahrt des Gespanns komplex ist.

Des Weiteren ist ein Einweiser erforderlich, um Kollisionsgefahren zwischen dem Gespann und Hindernissen zu reduzieren. Da der Einweiser bei der eigentlichen Funktion des Gespanns, was in der Regel der Transport einer Nutzlast von einem Ausgangsort zu einem Zielort ist, überflüssig ist, besteht ein Interesse daran, das Rangieren des Gespanns soweit zu vereinfachen, dass es ohne Einweiser durchführbar ist.

Die vorliegende Erfindung beschäftigt sich mit dem Problem, für ein Steuerungssystem der eingangs genannten Art eine verbesserte Ausführungsform anzugeben, die insbesondere das Rangieren bzw. Rückwärtsfahren eines Gespanns vereinfacht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das bei einem Gespann auftretende Rückfahrproblem für den Fahrzeugführer auf ein vergleichsweise einfaches Rückfahrproblem eines eingliedrigen Fahrzeuges, das nur eine gelenkte Radachse aufweist, zurückzuführen.

Das Rückwärtsfahren eines eingliedrigen Fahrzeugs mit gelenkter Vorderachse entspricht dem Rückwärtsfahren eines normalen Personenkraftwagens und kann daher vergleichsweise einfach durchgeführt werden. Der Fahrzeugführer muss bei der vorliegenden Erfindung für den Anhängerlenkwinkel einer zur Lenkung des Anhängers dienenden Radachse mittels eines entsprechenden Sollwertgebers einen Sollwert vorgeben, der den Anhänger bei Rückwärtsfahrt an den gewünschten Zielort lenkt.

Die Erfindung schlägt hierzu eine Rückfahreinrichtung vor, die im Aktivzustand aus dem Soll-Anhängerlenkwinkel und einem aktuellen Ist-Anhängerlenkwinkel für die Lenkungsanlage des Zugfahrzeugs einen Solllenkwinkel ermittelt, der so berechnet ist, dass er bei seiner Umsetzung bei fahrendem Gespann den Anhängerlenkwinkel auf den gewünschten Sollwert überführt. Mit anderen Worten, die Rückfahreinrichtung berücksichtigt die komplexe Kinematik zwischen Zugfahrzeug und Anhänger und erzeugt am Zugfahrzeug eine Lenkbetätigung, die beim Fahren des Gespanns zu der vom Fahrer gewünschten Lenkbetätigung am Anhänger führt. Das Rangieren und insbesondere das Rückwärtsfahren des Gespanns kann dadurch erheblich vereinfacht werden.

Die Implementierung der Rückfahreinrichtung in das Steuerungssystem ist dabei vergleichsweise einfach, da mit Hilfe der Rückfahreinrichtung lediglich ein modifizierter Bewegungsvektor generiert werden muss, der dann beim Fahren des Gespanns zu der gewünschten Lenkbewegung des Anhängers führt.

Bei einer vorteilhaften Ausführungsform kann eine fahrzeugferne Fernbedieneinrichtung vorgesehen sein, in die der Fahrzeugführer einen Fahrerwunsch eingibt und die aus dem Fahrerwunsch den Bewegungsvektor generiert. Eine Sender-Empfänger-Anordnung ermöglicht dabei die erforderliche Kommunikation zwischen der Fernbedieneinrichtung, der Rückfahreinrichtung und der Steuereinrichtung. Zweckmäßig erfolgt die Kommunikation dabei über eine Antriebsstrang-Schnittstellenanordnung. Diese Fernbedieneinrichtung kann einen Anhängerlenkwinkel-Sollwertgeber aufweisen, wodurch es für den Fahrzeugführer besonders einfach ist, den erforderlichen Soll-Anhängerlenkwinkel vorzugeben, indem sich der Fahrzeugführer an einer geeigneten Stelle in der Nähe des Anhängers positioniert.

Zweckmäßig ist eine Weiterbildung, bei welcher die Rückfahreinrichtung im Aktivzustand einen Zugfahrzeuglenkwinkel-Sollwertgeber, insbesondere denjenigen der Fernbedieneinrichtung, als Anhängerlenkwinkel-Sollwertgeber nutzt. Während der Fahrzeugführer im Passivzustand der Rückfahreinrichtung den Zugfahrzeuglenkwinkel-Sollwertgeber des Cockpits und/oder der Fernbedieneinrichtung zur Eingabe von Soll-Zugfahrzeuglenkwinkeln nutzt, verwendet die Rückfahreinrichtung im Aktivzustand die am vorhandenen Zugfahrzeuglenkwinkel-Sollwertgeber abgreifbaren Soll-Zugfahrzeuglenkwinkel als Soll-Anhängerlenkwinkel. Die Erfindung greift somit auf einen ohnehin vorhandenen Zugfahrzeuglenkwinkel-Sollwertgeber zurück und gibt diesem eine Doppelfunktion. Die Realisierung der Rückfahreinrichtung kommt dadurch ohne zusätzlichen Lenkwinkel-Sollwertgeber für den Anhänger aus und ist dadurch vergleichsweise preiswert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine vereinfachte Draufsicht auf ein Gespann, das als Gliederzug ausgebildet ist,
- Fig. 2: eine Draufsicht wie in Fig. 1, jedoch bei einem Gespann, das als Sattelzug ausgebildet ist,
- Fig. 3: eine schaltplanartige Prinzipdarstellung eines Steuerungssystems nach der Erfindung,
- Fig. 4: eine vereinfachte Draufsicht auf ein Gespann wie in Fig. 1, jedoch bei einer anderen Ausführungsform,
- Fig. 5: eine Draufsicht wie in Fig. 4, jedoch bei einer weiteren Ausführungsform,
- Fig. 6: eine Prinzipdarstellung einer Reglerstruktur,
- Fig. 7: eine Steuergerätearchitektur zur Realisierung des Steuerungssystems.

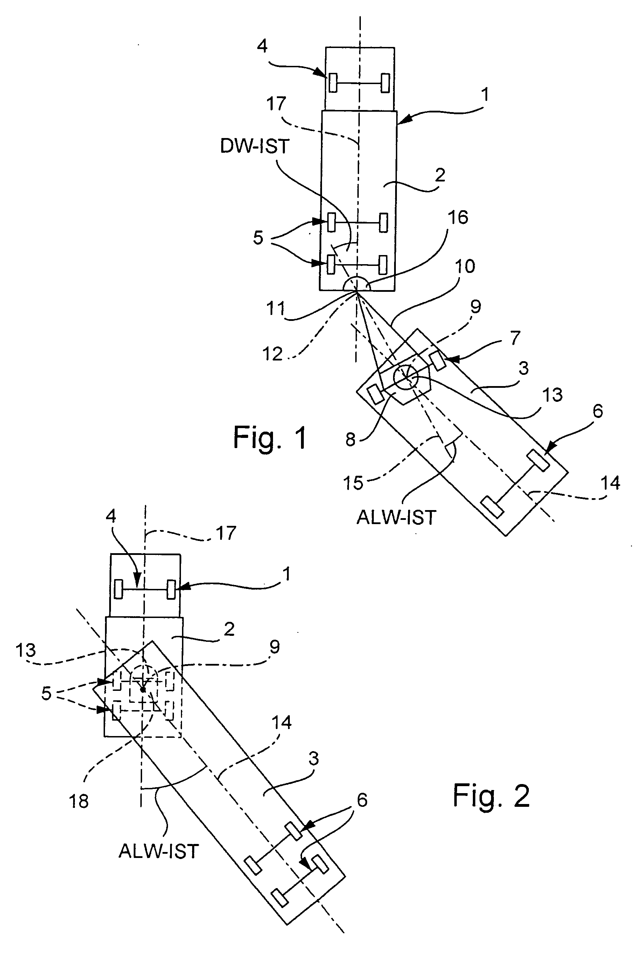

Entsprechend den Fig. 1 und 2 besitzt ein Fahrzeug 1, das als Gespann ausgebildet ist, ein Zugfahrzeug 2 sowie einen Anhänger 3. Das Zugfahrzeug 2 besitzt frontseitig zumindest eine lenkbare Radachse 4 und heckseitig wenigstens eine nicht-lenkbare Radachse 5. Der Anhänger 3 umfasst zumindest eine nicht-lenkbare heckseitig angeordnete Radachse 6.

Bei der Ausführungsform gemäß Fig. 1 ist das Gespann 1 als Gliederzug ausgebildet, bei dem der Anhänger 3 frontseitig ebenfalls eine lenkbare Radachse 7 besitzt. Diese Radachse 7 ist über einen Drehkranz 8 um eine erste vertikale Drehachse 9 drehbar am Anhänger 3 gelagert. Der Drehkranz 8 ist mit Hilfe einer Deichsel 10 drehbar, die an einer Anhängerkupplung 11 des Zugfahrzeugs 2 befestigt und um eine zweite vertikale Drehachse 12 drehbeweglich ist.

Erfindungsgemäß ist nun das Gespann 1 mit einem Anhängerlenkwinkel-Istwertgeber 13 ausgestattet, der einen Ist-Anhängerlenkwinkel ALW-IST ermittelt. Dieser Ist-Anhängerlenkwinkel ALW-IST ist dabei zwischen einer Längsrichtung 14 des Anhängers 3 und einer Längsrichtung 15 der Deichsel 10 ausgebildet, wobei sich die genannten Längsrichtungen 14, 15 in der ersten Drehachse 9 schneiden. Des Weiteren ist das Gespann 2 mit einem Deichselwinkel-Istwertgeber 16 ausgestattet, der einen Ist-Deichselwinkel DW-IST ermittelt. Dieser Ist-Deichselwinkel DW-IST ist dabei zwischen der Längsachse 15 der Deichsel 10 und einer Längsachse 17 des Zugfahrzeugs 2 ausgebildet, wobei sich diese Längsachsen 15, 17 in der zweiten Drehachse 12 schneiden.

Im Unterschied dazu ist bei der Variante gemäß Fig. 2 das Gespann 1 als Sattelzug ausgebildet. Der Anhänger 3 ist demnach ein Auflieger, der über einen Sattel 18 auf dem Zugfahrzeug 2 aufliegt. Im Sattel 18 ist dann eine vertikale Drehachse ausgebildet, die der ersten Drehachse 9 des Gliederzugs 1 aus Fig. 1 entspricht und daher auch mit 9 bezeichnet wird. Da der Anhänger 3 beim Sattelzug 1 keine frontseitige Radachse besitzt, dienen die heckseitigen, nicht-lenkbaren Radachsen 5 des Zugfahrzeugs 2 zur Lenkung des Anhängers 3. Dementsprechend mißt der Anhängerlenkwinkel-Istwertgeber 19 bei dieser Ausführungsform einen Ist-Anhängerlenkwinkel ALW-IST, der zwischen der Längsachse 14 des Anhängers 3 und der Längsachse 17 des Zugfahrzeugs 2 ausgebildet ist. Die Kinematik ist insbesondere für die Rückwärtsfahrt beim Sattelzug 1 gemäß Fig. 2 weniger komplex als beim Gliederzug 1 gemäß Fig. 1.

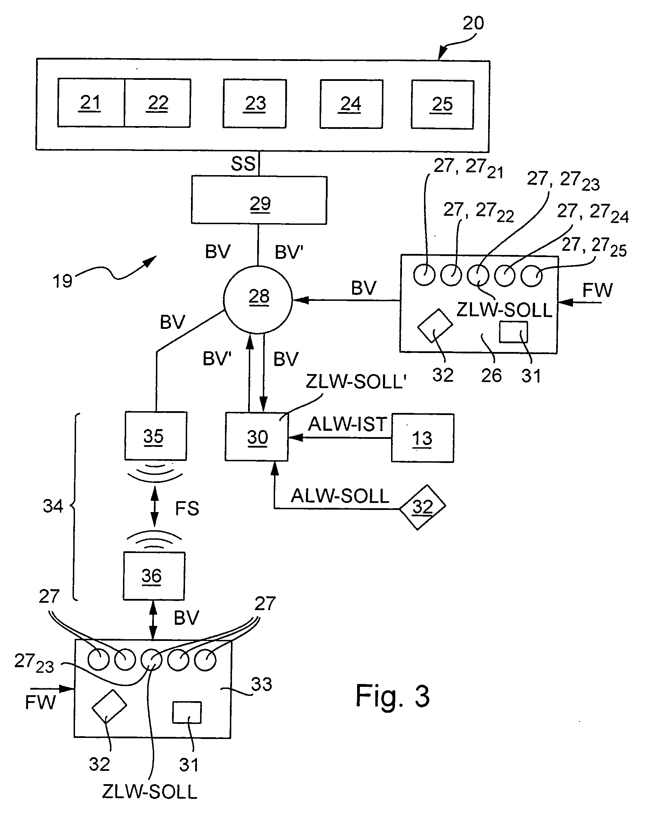

Entsprechend Fig. 3 umfasst ein erfindungsgemäßes Steuerungssystem 19 einen Antriebsstrang 20, der im Fahrzeug 1 bzw. im Zugfahrzeug 2 angeordnet ist. Dieser Antriebsstrang 20 ist elektronisch ansteuerbar ausgebildet und umfasst hier zumindest ein Antriebsaggregat 21, ein Getriebe 22, eine Lenkungsanlage 23, eine Bremsanlage 24 sowie eine Niveauregulierungseinrichtung 25.

Das Steuerungssystem 19 umfasst außerdem eine Bedieneinrichtung 26, die fest im Fahrzeug 1 bzw. im Zugfahrzeug 2 installiert ist. Die Bedieneinrichtung 26 umfasst mehrere Bedienelemente 27, die jeweils einer der Komponenten 21 bis 25 des Antriebsstrangs 20 zugeordnet sind. Im Einzelnen handelt es sich beispielsweise um eine Gaspedal 27₂₁, eine Gangschaltung 27₂₂, ein Lenkrad 27₂₃, ein Bremspedal 27₂₄ sowie ein Regulierelement 27₂₅ zur Betätigung der Niveauregulierungseinrichtung 25. Das Lenkrad 27₂₃ dient dabei als Zugfahrzeuglenkwinkel-Sollwertgeber, der einen Soll-Zugfahrzeuglenkwinkel ZLW-SOLL vorgibt, der an der lenkbaren Radachse 4 des Zugfahrzeugs 2 eingestellt werden soll.

Mit Hilfe der Bedienelemente 27 kann somit ein Fahrzeugführer einen durch einen Pfeil symbolisierten Fahrerwunsch FW in die Bedieneinrichtung 26 eingeben. Die Bedieneinrichtung 26 ist dabei so ausgebildet, dass sie aus dem eingangsseitigen Fahrerwunsch FW ausgangsseitig einen Bewegungsvektor BV generiert, der standardisiert ist und die einzelnen Vorgabe- oder Sollwerte der Bedienelemente 27 beinhaltet. Die Bedieneinrichtung 26 ist an eine Antriebsstrang-Schnittstellenanordnung 28 angeschlossen, die hier zumindest einen Sternpunkt aufweist.

Das Steuerungssystem 19 besitzt außerdem eine Steuereinrichtung 29, die an den Antriebsstrang 20 und an die Antriebsstrang-Schnittstellenanordnung 28 angeschlossen ist. Die Steuereinrichtung 29 ist so ausgebildet, dass sie aus einem eingehenden Bewegungsvektor BV ausgangsseitig Steuersignale SS generiert. Diese Steuersignale SS werden dem Antriebsstrang 20 übermittelt und können von diesem bzw. von dessen Komponenten 21 bis 25 abgearbeitet werden, um so den ursprünglichen Fahrerwunsch FW umzusetzen.

Erfindungsgemäß ist das Steuerungssystem 19 außerdem mit einer Rückfahreinrichtung 30 ausgestattet, die das Rangieren und im besonderen Maße das Rückwärtsfahren des Gespanns 1 vereinfacht. Die Rückfahreinrichtung 30 ist zwischen einem Aktivzustand und einem Passivzustand umschaltbar, wozu im Beispiel die Bedieneinrichtung 26 mit einem entsprechenden Schalter 31 ausgestattet ist. Der Schaltzustand des Schalters 31 kann über den Bewegungsvektor BV oder als separates Signal der Antriebsstrang-Schnittstellenanordnung 28 mitgeteilt werden, an die auch die Rückfahreinrichtung 30 angeschlossen ist. Die Rückfahreinrichtung 30 kommuniziert mit dem Anhängerlenkwinkel-Istwertgeber 13 und erhält von diesem stets den aktuellen Ist-Anhängerlenkwinkel ALW-IST. Des Weiteren kommuniziert die Rückfahreinrichtung 30 mit einem Anhängerlenkwinkel-Sollwertgeber 32, der beispielsweise wie ein Lenkrad oder ein Joystick ausgebildet sein kann. Über diesen Anhänger-Lenkwinkel-Sollwertgeber 32 kann der Fahrzeugführer einen Soll-Anhängerlenkwinkel ALW-SOLL eingeben, wodurch dieser Soll-Anhängerlenkwinkel ALW-SOLL der Rückfahreinrichtung 30 zur Verfügung stehen.

Erfindungsgemäß ist die Rückfahreinrichtung 30 nun so ausgestaltet, dass sie anhand des Ist-Anhängerlenkwinkels ALW-IST und des Soll-Anhängerlenkwinkels ALW-SOLL einen modifizierten Soll-Zugfahrzeuglenkwinkel ZLW-SOLL' bestimmt.

Die Rückfahreinrichtung 30 bewirkt, dass dieser modifizierte Soll-Zugfahrzeuglenkwinkel ZLW-Soll' in einem modifizierten Bewegungsvektor BV' an die Stelle des tatsächlichen Soll-Zugfahrzeuglenkwinkels ZLW-SOLL tritt. Der modifizierte Soll-Zugfahrzeuglenkwinkel ZLW-SOLL' ist dabei so berechnet, dass sich am Anhänger 3 beim Fahren des Gespanns 1 der gewünschte Soll-Anhängerlenkwinkel ALW-SOLL einstellt, wenn dieser modifizierte Bewegungsvektor BV' bzw. die daraus abgeleiteten Steuersignale SS im Antriebsstrang 20 abgearbeitet werden. Die Rückfahreinrichtung 30 berücksichtigt somit die kinematische Kopplung zwischen Anhänger 3 und Zugfahrzeug 2 und ermöglicht dadurch eine extreme Vereinfachung für das Rangieren und insbesondere für das Rückwärtsfahren des Fahrzeugs 1. Insbesondere kann mit Hilfe der Rückfahreinrichtung 30 der Anhänger 3 besonders einfach rückwärts an einen gewünschten Zielort herangefahren werden. Die Bedienung des Anhängerlenkwinkel-Sollwertgebers 32 entspricht dabei der Bedienung eines Lenkrads in einem eingliedrigen Fahrzeug, wie z.B. einem Personenkraftwagen, bei der Rückwärtsfahrt.

Entsprechend einer bevorzugten Vorgehensweise enthält der tatsächliche Bewegungsvektor BV, der von der Bedieneinrichtung 26 der Antriebsstrang-Schnittstellenanordnung 28 zugeführt wird, den tatsächlichen Soll-Zugfahrzeuglenkwinkel ZLW-SOLL. Bei aktivierter Rückfahreinrichtung 30 verwendet die Steuereinrichtung 29 nicht den tatsächlichen Bewegungsvektor BV, sondern den modifizierten Bewegungsvektor BV'. Zur Erzeugung des modifizierten Bewegungsvektors BV' greift die Rückfahreinrichtung 30 zunächst an der Antriebsstrang-Schnittstellenanordnung 28 den tatsächlichen Bewegungsvektor BV ab und extrahiert daraus den tatsächlichen Soll-Zugfahrzeuglenkwinkel ZLW-SOLL. Stattdessen setzt die Rückfahreinrichtung 30 in den Bewegungsvektor BV den errechneten, modifizierten Soll-Zugfahrzeuglenkwinkel ZLW-SOLL' ein, wodurch der modifizierte Bewegungsvektor BV' entsteht und der Antriebsstrang-Schnittstellenanordnung 28 übermittelt wird.

Ebenso ist eine integrale Bauweise oder integrale Vernetzung möglich, bei welcher die Rückfahreinrichtung 30 im Aktivzustand bereits vor der Bildung des Bewegungsvektors BV den tatsächlichen Soll-Zugfahrzeuglenkwinkel ZLW-SOLL durch den modifizierten Soll-Zugfahrzeuglenkwinkel ZLW-SOLL' ersetzt. Die Bedieneinrichtung 26 generiert demnach im Aktivzustand der Rückfahreinrichtung 30 bereits den modifizierten Bewegungsvektor BV'. Bei dieser Variante kann die Rückfahreinrichtung 30 zweckmäßig bereits in die Bedieneinrichtung 26 integriert sein. Des Weiteren ist es möglich, den Anhängerlenkwinkel-Sollwertgeber 32 zusätzlich oder alternativ in die Bedieneinrichtung 26 zu integrieren.

Bei der hier gezeigten besonderen Ausführungsform umfasst das Steuerungssystem 19 außerdem eine Fernbedieneinrichtung 33, die vom Fahrzeug 1 entfernt ist und relativ zu diesem unabhängig bewegbar ist. Auch die Fernbedieneinrichtung 33 umfasst eine Reihe von Bedienelementen 27 zur Betätigung der Komponenten 21 bis 25 des Antriebsstranges 20, welche im wesentlichen den Bedienelementen 27 der fahrzeugfesten Bedieneinrichtung 26 entsprechen. Des Weiteren ist die Fernbedieneinrichtung 33 ebenfalls mit dem Schalter 31 zum Aktivieren und Deaktivieren der Rückfahreinrichtung 30 ausgestattet. Ebenso kann ein Anhängerlenkwinkel-Sollwertgeber 32 vorgesehen sein. Die Fernbedieneinrichtung 33 ist über eine durch eine geschweifte Klammer gekennzeichnete Sender-Empfänger-Anordnung 34 an die Antriebsstrang-Schnittstellenanordnung 28 angeschlossen. Die Sender-Empfänger-Anordnung 34 umfasst eine fahrzeugfeste Sender-Empfänger-Einheit 35, die mit der Antriebsstrang-Schnittstellenanordnung 28 kommuniziert und eine fahrzeugferne Sender-Empfänger-Einheit 36, die mit der Fernbedieneinrichtung 33 kommuniziert. Die beiden Sender-Empfänger-Einheiten 35, 36 kommunizieren vorzugsweise drahtlos miteinander. Zweckmäßig bilden die Fernbedieneinrichtung 33 und die fahrzeugferne Sender-Empfänger-Einheit 36 eine tragbare Einheit, die vom Fahrzeugführer mitgeführt werden kann.

Im Normalbetrieb, also bei deaktivierter Rückfahreinrichtung 30 kann der Fahrer über die Bedieneinrichtung 33 in gewohnter Weise einen Fahrerwunsch FW eingeben, aus dem die Fernbedieneinrichtung 33 den standardisierten Bewegungsvektor generiert. Über die Sender-Empfänger-Anordnung 34 wird der Bewegungsvektor BV in Form von Fernbediensignalen FS übermittelt und wieder als Bewegungsvektor der Antriebsstrang-Schnittstellenanordnung 28 zugeführt. Hier kann er von der Steuereinrichtung 29 abgegriffen und in die entsprechenden Steuersignale SS transformiert werden.

Wenn mit dem Gespann 1 der Anhänger 3 durch Rückwärtsfahrt in eine bestimmte Position (Zielort) überführt werden soll, wird durch Betätigen des Schalters 31 die Rückfahreinrichtung 30 aktiviert. Mit Hilfe des Anhängerlenkwinkel-Sollwertgebers 32 kann der Fahrzeugführer Soll-Anhängerlenkwinkel ALS-SOLL vorgeben, die am Anhänger 3 eingestellt werden müssen, um beim Rangieren des Anhängers bzw. des Gespanns 1 das Erreichen des Zielorts für den Anhänger 3 zu ermöglichen. Die Rückfahreinrichtung 30 generiert im Aktivzustand in der oben beschriebenen Weise den modifizierten Bewegungsvektor BV', der dann von der Steuerungseinrichtung 29 zur Generierung der Steuersignale verwendet wird. Auch hier ist es grundsätzlich möglich, die Rückfahreinrichtung 30 in die Fernbedieneinrichtung 33 zu integrieren.

Auf der Überlegung, dass im Aktivzustand der Rückfahreinrichtung 30 der Zugfahrzeuglenkwinkel-Sollwertgeber 27₂₃ nicht zur Eingabe eines Soll-Zugfahrzeuglenkwinkels ZLW-Soll benötigt wird, beruht eine Weiterentwicklung des Steuerungssystems 19, bei der im Aktivzustand der Zugfahrzeuglenkwinkel-Sollwertgeber 27₂₃ als Anhängerlenkwinkel-Sollwertgeber genutzt wird. Das heißt, im Aktivzustand werden die vom Zugfahrzeuglenkwinkel-Sollwertgeber 27₂₃ erzeugten Soll-Lenkwinkel nicht als Soll-Zugfahrzeuglenkwinkel ZLW-SOLL, sondern als Soll-Anhängerlenkwinkel ALW-Soll aufgefasst und verwendet. Durch diese Vorgehensweise kann ein Lenkwinkel-Sollwertgeber, zum Beispiel ein Lenkrad oder ein Joystick, eingespart werden.

Um die Fahrsicherheit zusätzlich zu verbessern, kann die Rückfahreinrichtung 30 so ausgestaltet sein, dass sie zumindest im Aktivzustand, zweckmäßig jedoch auch im Passivzustand, permanent aus den Ist-Werten des Anhängerlenkwinkels ALW-IST und/oder des Deichselwinkels DW-IST eine Maximalgeschwindigkeit für das Gespann 1 ermittelt. Die Gespanngeschwindigkeit wird dann auf geeignete Weise auf diese Maximalgeschwindigkeit begrenzt. Beispielsweise stellt die Rückfahreinrichtung 30 die ermittelte Maximalgeschwindigkeit über die Antriebsstrang-Schnittstellenanordnung 28 bereit, so dass diese zum Beispiel von der Steuereinrichtung 29 bei der Generierung der Steuersignale SS berücksichtigt werden kann. Ebenso kann die Maximalgeschwindigkeit bereits bei der Erzeugung des Bewegungsvektors BV berücksichtigt werden.

Des Weiteren kann die Fahrzeugsicherheit dadurch erhöht werden, dass die Rückfahreinrichtung 30 sowohl im Aktivzustand als auch im Passivzustand die Ist-Werte für die Anhängerlenkwinkel ALW-IST und - soweit vorhanden - des Deichselwinkels DW-IST permanent im Hinblick auf vorgegebene Grenzwerte überwacht. Bei Erreichen oder Übersteigen eines maximal zulässigen Anhängerlenkwinkels ALW-IST bzw. Deichselwinkels DW-IST veranlasst die Rückfahreinrichtung 30 ein Abbremsen des Gespanns 1. Durch diese Maßnahme können kollisionsbedingte Beschädigungen von Zugfahrzeug 2, Anhänger 3 und Deichsel 10 vermieden werden. Wenn diese Schutzfunktion greift, muss der Fahrzeugführer erst wieder in der Gegenrichtung fahren, um den jeweiligen Winkel wieder zu reduzieren. Insbesondere ist es möglich, beim Überschreiten einer Maximalgrenze für den Anhängerlenkwinkel ALW-IST und/oder den Deichselwinkel DW-IST eine Bremsung des Gespanns 1 zu initiieren, wenn der jeweilige Winkel weiter steigt, unabhängig von der Bewegungsrichtung des Fahrzeugs 1 (vorwärts oder rückwärts). Auf diese Weise wird ein Lösen einer im Einzelfall entstehenden "Verkeilung" zwischen Zugfahrzeug 2 und Anhänger 3 bei einem Gliederzug in jedem Fall ohne einen kritischen Selbstsperrzustand, der als "Dead-Lock" bezeichnet wird, ermöglicht.

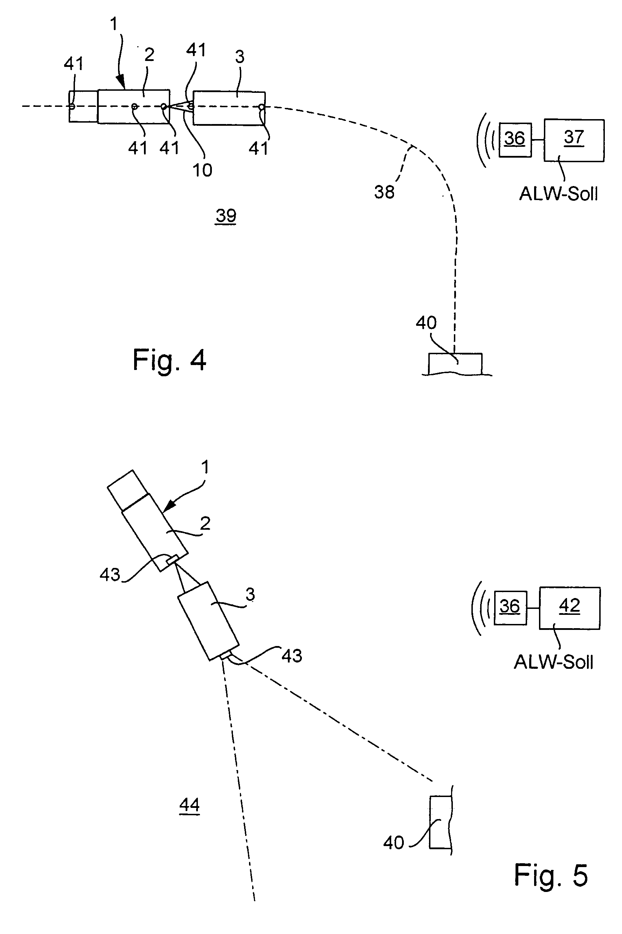

Entsprechend Fig. 4 kann das Steuerungssystem 19 auch mit einer Bahnerkennungseinrichtung 37 ausgestattet sein, die grundsätzlich im Fahrzeug 1 oder wie hier extern angeordnet sein kann. Die externe Bahnerkennungseinrichtung 37 kommuniziert zum Beispiel über die Sender-Empfänger-Anordnung 34 mit den übrigen Komponenten des Steuerungssystems 19. Die Bahnerkennungseinrichtung 37 ist so ausgebildet, dass sie eine vorbestimmte Fahrbahnmarkierung 38, die in Fig. 4 durch eine unterbrochene Linie symbolisiert ist, erkennt und in Abhängigkeit dieser Fahrbahnmarkierung 38 im Aktivzustand der Rückfahreinrichtung 30 den Soll-Anhängerlenkwinkel ALW-SOLL liefert. Die Fahrbahnmarkierung 38 ist beispielsweise am Boden eines Geländes 39 angebracht und führt auf diesem Gelände 39 zu einem Zielort 40 für das Gespann 1 bzw. für den Anhänger 3. Beispielsweise handelt es sich bei dem Gelände 39 um eine Verladestation für Lastkraftwagen oder um einen Speditionshof. Der Zielort 40 ist beispielsweise durch eine rückwärts anzufahrende Verladerampe gebildet. Wenn das Fahrzeug 1 bei seiner Rückwärtsfahrt der Fahrbahnmarkierung 38 folgt, gelangt der Anhänger 3 heckseitig automatisch frontal bis zur Verladerampe 40. Hierbei ist kein Eingreifen durch einen Fahrzeugführer erforderlich. Gerade für eine Verladestation ist eine Ausführungsform möglich, bei der mehrere Fahrzeuge 1 simultan und koordiniert ferngesteuert werden können, wobei die Bahnerkennungseinrichtung 37 ein selbstständiges Auffinden des Zielorts 40 erheblich vereinfacht.

Die Bahnerkennungseinrichtung 37 kann beispielsweise mit einem Radar oder dergleichen arbeiten, das die exakte Position des Zugfahrzeugs 1 innerhalb des Geländes 39 erkennt. Ebenso ist es möglich, dass das Fahrzeug 1 mit wenigstens einer Kamera 41 ausgestattet ist, mit der überwacht werden kann, ob sich das Gespann 1 auf der Fahrbahnmarkierung 38 bewegt oder nicht. Beispielsweise kann das Zugfahrzeug mit drei Zeilenkameras 41 und der Anhänger 3 mit zwei Zeilenkameras 41 ausgerüstet werden, wobei diese Kameras 41 senkrecht nach unten gerichtet sind. Eine Kamera 41 ist an der Front des Zugfahrzeugs 2 angebracht. Eine weitere Kamera ist ca. 1 m vor der oder den Hinterachsen des Zugfahrzeugs 2 und eine weitere Kamera 41 etwa 1 m hinter der oder den Hinterachsen 41 des Zugfahrzeugs 2 angeordnet. Die Kameras 41 des Anhängers 3 sind so angeordnet, dass die eine etwa 1 m hinter der Hinterachse, also im wesentlichen am Heck des Anhängers 3 angeordnet ist, während die andere etwa 1 m vor der gelenkten Achse, also im Bereich der Deichsel 10 des Anhängers 3 angeordnet ist. Die Kameras 41 liegen bei gestrecktem Gespann 1 alle in einer geraden Linie. Mit diesem Aufbau können die Kameras 41 die linienförmige Fahrbahnmarkierung 38 im Hinblick auf Lage und Krümmung sowohl bei Vorwärtsfahrt als auch bei Rückwärtsfahrt erkennen. Mit Hilfe der erfindungsgemäßen Rückfahreinrichtung 30 reicht jedoch eine heckseitig am Anhänger 3 angeordnete Kamera 41 aus, um beim Rückwärtsfahren das Heck des Anhängers 3 zur Verladerampe 40 zu führen.

Entsprechend Fig. 5 kann das erfindungsgemäße Steuerungssystem 19 zusätzlich oder alternativ mit einer optischen Zielerkennungseinrichtung 42 ausgestattet sein, die ebenfalls bezüglich des Fahrzeugs 1 sowohl intern als auch extern angeordnet sein kann. Die Zielerkennungseinrichtung 42 kann mit Hilfe einer Rückfahrkamera 43, die beim Gespann 1 am Heck des Anhängers 3 angebracht ist, den Zielort 40 bereits aus einem Abstand erkennen, von dem aus durch richtiges Lenken der Anhänger 3 ohne weiteres zum Zielort 40 rückwärts herangefahren werden kann. Die von der Rückfahrkamera 43 gelieferten Bilder werden von einem Bildverarbeitungssystem der Zielerkennungseinrichtung 42 ausgewertet. Beispielsweise können dabei bereits gespeicherte Bilder vorgegebener Zielorte 40 mit dem aktuellen Bild verglichen werden. Dabei ist es zum Beispiel möglich, aus den extrahierten Kanten die relative Lage und die relative Position des Anhängers 3 bezüglich des Zielorts 40 zu berechnen. Anhand dieser Relativlage und Relativposition kann eine abzufahrende Bahn berechnet werden, die den Anhänger 3 heckseitig zum Zielort 40 führt. Hierbei liefert die Zielerkennungseinrichtung 42 den Soll-Anhängerlenkwinkel ALW-SOLL, wodurch die Rückwärtsfahrt erheblich vereinfacht wird. Auch dieser Rangierbetrieb mit Hilfe der Zielerkennungseinrichtung 42 erfolgt zweckmäßig auf einem abgeschlossenen Gelände 44 und kann quasi durch Knopfdruck vollautomatisch ablaufen. Ebenso ist denkbar, dass auch am Heck des Zugfahrzeugs 2 eine Rückfahrkamera 43 angebracht ist, um bei einer erweiterten Ausführungsform auch das Zugfahrzeug 2 ohne Anhänger 3 autonom zu einem entsprechenden Zielort 40, zum Beispiel die Deichsel 10 des Anhängers 3 oder die Aufliegerkupplung eines als Auflieger ausgebildeten Anhängers 3 oder eine Wechselbrücke rückwärts anzufahren.

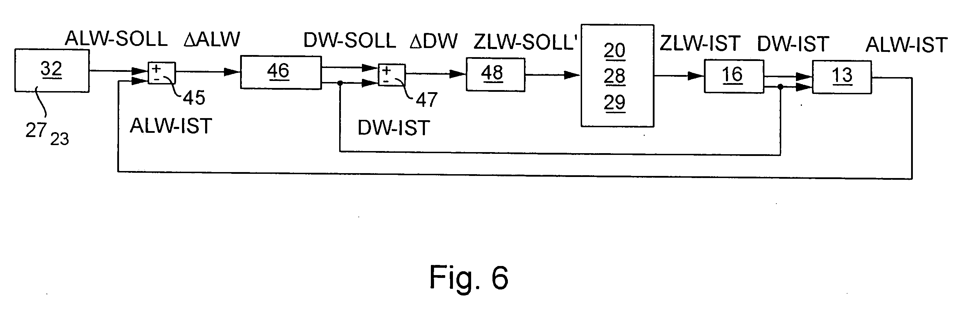

Fig. 6 zeigt nun eine Reglerstruktur für die Rückwärtsfahrt eines als Gliederzug ausgebildeten Gespanns 1 (vgl. Fig. 1), die im Aktivzustand der Rückfahreinrichtung 30 wirkt. Mit Hilfe des Anhängerlenkwinkel-Sollwertgebers 32 wird der Soll-Anhängerlenkwinkel ALW-SOLL vorgegeben. Wie erwähnt kann der Anhängerlenkwinkel-Sollwertgeber 32 an einer Fernbedieneinrichtung 33 ausgebildet sein und zweckmäßig dort durch den Zugfahrzeuglenkwinkel-Sollwertgeber 27₂₃ gebildet sein.

In einem ersten Komparator 45 wird ein Soll-Ist-Vergleich der Anhängerlenkwinkel durchgeführt und die Regelabweichung ΔALW bestimmt und einem Führungsregler 46 übermittelt, der daraus einen Soll-Deichselwinkel DW-SOLL ermittelt. In einem zweiten Komparator 47 erfolgt ein Soll-Ist-Vergleich der Deichselwinkel, wobei eine Regelabweichung ΔDW für den Deichselwinkel ermittelt und einem Folgeregler 48 übermittelt wird. Der Folgeregler 48 generiert in Abhängigkeit der Regelabweichung ΔDW des Deichselwinkels den modifizierten Soll-Zugfahrzeuglenkwinkel ZLW-SOLL', der in Form des modifizierter Bewegungsvektors BV' über die Antriebsstrang-Schnittstellenanordnung 28 zur Steuereinrichtung 29 gelangt und in Form von entsprechenden Steuersignalen SS schließlich zum Antriebsstrang 20 gelangt. Im Antriebsstrang 20 kann dann der modifizierte Soll-Zugfahrzeuglenkwinkel ZLW-SOLL' umgesetzt werden. Auf diese Weise kommt es zu einem Ist-Zugfahrzeuglenkwinkel ZLW-IST, der sich beim Fahren des Gespanns 1 auf die Deichsel 10 dahingehend auswirkt, dass sich der Ist-Deichselwinkel DW-IST ändert. Der sich ändernde Ist-Deichselwinkel DW-IST wird von Deichselwinkel-Istwertgeber 16 erfasst und zum zweiten Komparator 47 rückgeführt. Der sich ändernde Ist-Deichselwinkel DE-IST bewirkt beim Fahren des Gespanns 1 außerdem eine Änderung des Ist-Anhängerlenkwinkels ALW-IST, wobei diese Änderung vom Anhängerlenkwinkel-Istwertgeber 13 erfasst wird. Der Anhängerlenkwinkel-Istwertgeber 13 führt dann den aktuellen Ist-Anhängerlenkwinkel ALW-IST zum ersten Komparator 45 zurück.

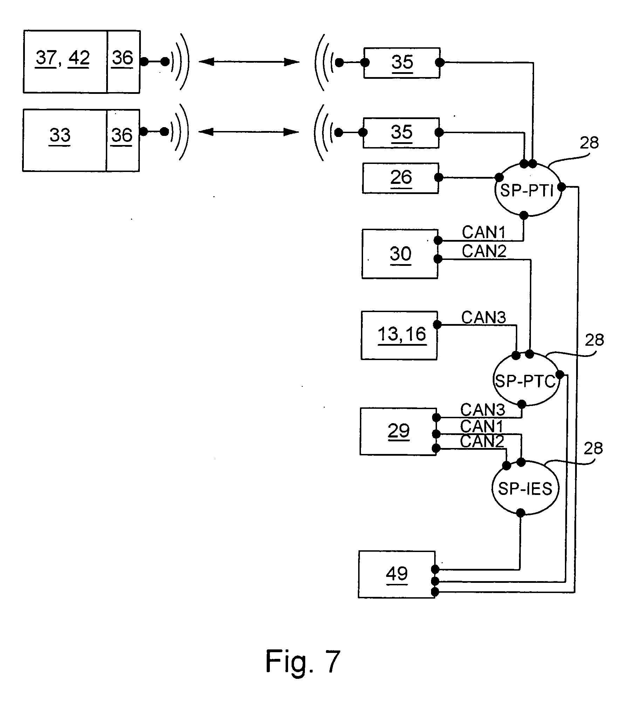

Fig. 7 zeigt nun eine bevorzugte Steuergerätearchitektur, die im Fahrzeug 1 besonders einfach aufgebaut werden kann. Wesentlich ist dabei, dass die Antriebsstrang-Schnittstellenanordnung 28 hier drei Sternpunkte umfasst, nämlich einen ersten Sternpunkt SP-PTI, einen zweiten Sternpunkt SP-PTC und einen dritten Sternpunkt SP-IES. An dem ersten Sternpunkt SP-PTI sind die fahrzeugfeste Bedieneinrichtung 26, zwei Sender-Empfänger-Einheiten 35, ein erster Bus CAN 1 und eine Überwachungseinrichtung 49 angeschlossen. Über die eine Sender-Empfänger-Einheit 35 kommuniziert die Fernbedieneinrichtung 33 mit dem ersten Sternpunkt SP-PTI. Über die zweite Sender-Empfänger-Einrichtung 35 kommuniziert eine andere externe Einrichtung, wie zum Beispiel die Bahnerkennungseinrichtung 37 oder die Zielerkennungseinrichtung 42, mit dem ersten Sternpunkt SP-PTI.

Die Überwachungseinrichtung 49 dient zur Überwachung, Aufzeichnung und späteren Auswertung der beim Betrieb laufenden Datenströme und ist in geeigneter Weise zur Aufzeichnung von Daten ausgebildet.

An den zweiten Sternpunkt SP-PTC sind ein Datenbus CAN 2, ein dritter Datenbus CAN 3 und die Überwachungseinrichtung 49 angeschlossen. An den dritten Sternpunkt SP-IES sind der erste Bus CAN 1, der zweite Bus CAN 2 und die Überwachungseinrichtung 49 angeschlossen.

Bei dieser Architektur ist die Steuereinrichtung 29 über den dritten Sternpunkt SP-IES an den Datenbus des Fahrzeugs 1 bzw. des Antriebsstrangs 20 angeschlossen und kann das Fahrzeug 1 entsprechend dem Bewegungsvektor BV ansteuern. Die Eingabe des Fahrerwunsches FW sowie die Erzeugung des Bewegungsvektors BV erfolgt dabei über den ersten Sternpunkt SP-PTI. Dementsprechend ist die Rückfahreinrichtung 30 auch an den ersten Sternpunkt SP-PTI über den ersten Bus CAN 1 angeschlossen. Der Anhängerlenkwinkel-Istwertgeber 13 und der Deichselwinkel-Istwertgeber 16 kommunizieren über einen dritten Datenbus CAN 3 mit dem zweiten Sternpunkt SP-PTC, an den auch die Rückfahreinrichtung 30 über den zweiten Datenbus CAN 2 angeschlossen ist.

## Patentansprüche

1. Steuerungssystem für ein Fahrzeug,
- wobei das Fahrzeug (1) mit einem elektronisch ansteuerbaren Antriebsstrang (20) ausgestattet ist, der zumindest eine Lenkungsanlage (23), eine Bremsanlage (24) und ein Antriebsaggregat (21) umfasst,
- wobei für das Fahrzeug (1) eine Bedieneinrichtung (26) vorgesehen ist, in die ein Fahrzeugführer einen Fahrerwunsch (FW) eingibt und die aus dem Fahrerwunsch (FW) einen standardisierten Bewegungsvektor (BV) generiert,
- wobei im Fahrzeug (1) eine Steuereinrichtung (29) angeordnet ist, die aus einem eingangsseitigen Bewegungsvektor (BV) ausgangsseitig Steuersignale (SS) zum Ansteuern des Antriebsstrangs (20) generiert und die zur Übertragung der Steuersignale (SS) mit dem Antriebsstrang (20) gekoppelt ist, der die Steuersignale (SS) zur Umsetzung des Fahrerwunsches (FW) abarbeitet,
**dadurch gekennzeichnet,**
- **dass** das Fahrzeug ein Gespann (1) aus einem Zugfahrzeug (2) und einem Anhänger (3) ist,
- **dass** eine Rückfahreinrichtung (30) vorgesehen ist, die zwischen einem Aktivzustand und einem Passivzustand umschaltbar ist,
- **dass** ein Anhänger Lenkwinkel-Istwertgeber (13) vorgesehen ist, der einen Ist-Anhängerlenkwinkel (ALW-IST) einer zur Lenkung des Anhängers (3) dienenden Radachse (7; 5) ermittelt und der zur Übertragung des Ist-Anhängerlenkwinkels (ALW-IST) mit der Rückfahreinrichtung (30) gekoppelt ist,
- **dass** ein Anhängerlenkwinkel-Sollwertgeber (32; 27₂₃) vorgesehen ist, über den der Fahrzeugführer einen Soll-Anhängerlenkwinkel (ALW-SOLL) eingibt und der zur Übertragung des Soll-Anhängerlenkwinkels (ALW-SOLL) mit der Rückfahreinrichtung (30) gekoppelt ist,
- **dass** die Rückfahreinrichtung (30) so ausgebildet ist, dass sie aus dem Ist-Anhängerlenkwinkel (ALW-IST) und dem Soll-Anhängerlenkwinkel (ALW-SOLL) einen modifizierten Soll-Zugfahrzeuglenkwinkel (ZLW-SOLL') für eine zur Lenkung des Zugfahrzeugs (2) dienenden Radachse (4) ermittelt, der im Aktivzustand der Rückfahreinrichtung (30) in einem modifizierten Bewegungsvektor (BV') an die Stelle des tatsächlichen Soll-Zugfahrzeuglenkwinkels (ZLW-SOLL) tritt und der bei Fahrt des Gespanns (1) den Ist-Anhängerlenkwinkel (ALW-IST) in den Soll-Anhängerlenkwinkel (ALW-SOLL) überführt, wenn der modifizierte Bewegungsvektor (BV') abgearbeitet wird.

2. Steuerungssystem nach Anspruch 1,
**dadurch gekennzeichnet,**
- **dass** ein Zugfahrzeuglenkwinkel-Sollwertgeber (27₂₃) vorgesehen ist, über den der Fahrzeugführer den tatsächlichen Soll-Zugfahrzeuglenkwinkel (ZLW-SOLL) eingibt, der zumindest im Passivzustand der Rückfahreinrichtung (30) in den tatsächlichen Bewegungsvektor (BV) eingeht,
- **dass** die Rückfahreinrichtung (30) im Aktivzustand vor der Bildung des Bewegungsvektors den tatsächlichen Soll-Zugfahrzeuglenkwinkel (ZLW-SOLL) durch den modifizierten Soll-Zugfahrzeuglenkwinkel (ZLW-SOLL') ersetzt, so dass nur der modifizierte Soll-Zugfahrzeuglenkwinkel (ZLW-SOLL') in den Bewegungsvektor (BV') eingeht, oder
- **dass** die Rückfahreinrichtung (30) im Aktivzustand aus dem tatsächlichen Bewegungsvektor (BV) den tatsächlichen Soll-Zugfahrzeuglenkwinkel (ZLW-SOLL) extrahiert und stattdessen den modifizierten Soll-Zugfahrzeuglenkwinkel (ZLW-SOLL') integriert, so dass nur der so modifizierte Bewegungsvektor (BV') generiert wird.

3. Steuerungssystem nach Anspruch 1 oder 2,
**dadurch gekennzeichnet,**
**dass** eine Antriebsstrang-Schnittstellenanordnung (28) vorgesehen ist, an welche die Bedieneinrichtung (26), die Steuereinrichtung (29) und die Rückfahreinrichtung (30) angeschlossen sind.

4. Steuerungssystem nach einem der Ansprüche 1 bis 3,
**dadurch gekennzeichnet,**
- **dass** eine fahrzeugferne Fernbedieneinrichtung (33) vorgesehen ist, in die der Fahrzeugführer einen Fahrerwunsch (FW) eingibt und die aus dem Fahrerwunsch (FW) den Bewegungsvektor (BV) generiert,
- **dass** eine Sender-Empfänger-Anordnung (34) vorgesehen ist, über welche die Fernbedieneinrichtung (33) an eine Antriebsstrang-Schnittstellenanordnung (28) angeschlossen ist, an die außerdem die Bedieneinrichtung (26), die Rückfahreinrichtung (30) und die Steuereinrichtung (29) angeschlossen sind,
- **dass** die Fernbedienungseinrichtung (33) einen Zugfahrzeuglenkwinkel-Sollwertgeber (27₂₃), den die Rückfahreinrichtung (30) im Aktivzustand als Anhängerlenkwinkel-Sollwertgeber nutzt, oder einen Anhängerlenkwinkel-Sollwertgeber (32) aufweist.

5. Steuerungssystem nach einem der Ansprüche 1 bis 4,
**dadurch gekennzeichnet,**
- **dass** der Anhängerlenkwinkel-Sollwertgeber im Aktivzustand durch einen Zugfahrzeuglenkwinkel-Sollwertgeber (27₂₃) gebildet ist, über den der Fahrzeugführer im Passivzustand der Rückfahreinrichtung (30) den tatsächlichen Soll-Zugfahrzeuglenkwinkel (ZLW-SOLL) eingibt,
- **dass** die Rückfahreinrichtung im Aktivzustand den Soll-Zugfahrzeuglenkwinkel (ZLW-SOLL) als Soll-Anhängerlenkwinkel (ALW-SOLL) verwendet.

6. Steuerungssystem nach Anspruch 3 oder 5,
**dadurch gekennzeichnet,**
**dass** die Antriebsstrang-Schnittstellenanordnung (28) wenigstens einen Sternpunkt aufweist.

7. Steuerungssystem nach einem der Ansprüche 1 bis 6,
**dadurch gekennzeichnet,**
- **dass** das Gespann (1) ein Gliederzug ist, bei dem der Anhänger (3) einen mit einer Deichsel (10) drehbaren Drehkranz (8) mit der lenkbaren Radachse (7) aufweist und über die Deichsel (10) mit einer Anhängerkupplung (11) des Zugfahrzeugs (2) verbunden ist,
- **dass** der Anhängerlenkwinkel-Istwertgeber (13) den Winkel (ALW-IST) zwischen der Längsrichtung (14) des Anhängers (3) und der Längsrichtung (15) der Deichsel (10) ermittelt,
- **dass** ein Deichselwinkel-Istwertgeber (16) vorgesehen ist, der einen Ist-Deichselwinkel (DW-IST) zwischen der Längsrichtung (15) der Deichsel (10) und der Längsrichtung (17 des Zugfahrzeugs (2) ermittelt und der zur Übertragung des Ist-Deichselwinkels (DW-IST) mit der Rückfahreinrichtung (30) gekoppelt ist,
- **dass** die Rückfahreinrichtung (30) so ausgebildet ist, dass sie zunächst aus dem Ist-Anhängerlenkwinkel (ALW-IST) und dem Soll-Anhängerlenkwinkel (ALW-SOLL) einen Soll-Deichselwinkel (DW-SOLL) ermittelt und anschließend aus dem Ist-Deichselwinkel (DW-IST) und dem Soll-Deichselwinkel (DW-SOLL) den modifizierten Soll-Zugfahrzeuglenkwinkel (ZLW-SOLL') ermittelt.

8. Steuerungssystem nach einem der Ansprüche 1 bis 6,
**dadurch gekennzeichnet,**
- **dass** das Gespann (1) ein Sattelzug ist, bei dem der Anhänger (3) über einen Sattel (18) auf dem Zugfahrzeug (2) aufliegt,
- **dass** der Anhängerlenkwinkel-Istwertgeber (13) den Winkel (ALW-IST) zwischen der Längsachse (14) des Anhängers (3) und der Längsachse (17) des Zugfahrzeugs (2) ermittelt.

9. Steuerungssystem nach einem der Ansprüche 1 bis 8,
**dadurch gekennzeichnet,**
- **dass** die Rückfahreinrichtung (30) aus dem Istwert des Anhängerlenkwinkels (ALW-IST) und/oder des Deichselwinkels (DW-IST) fortlaufend eine Maximalgeschwindigkeit für das Gespann (1) ermittelt,
- **dass** die Gespanngeschwindigkeit auf diese Maximalgeschwindigkeit begrenzt ist.

10. Steuerungssystem nach einem der Ansprüche 1 bis 9,
**dadurch gekennzeichnet,**
**dass** die Rückfahreinrichtung (30) im Aktivzustand und im Passivzustand permanent die Istwertwerte des Anhängerlenkwinkels (ALW-IST) und/oder des Deichselwinkels (DW-IST) überwacht und bei Erreichen eines maximal zulässigen Anhängerlenkwinkels und/oder Deichselwinkels ein Abbremsen des Gespanns (1) initiiert.

11. Steuerungssystem nach einem der Ansprüche 1 bis 10,
**dadurch gekennzeichnet,**
- **dass** eine optische Bahnerkennungseinrichtung (37) vorgesehen ist, die eine zum Zielort (40) des Gespanns (1) führende Fahrbahnmarkierung (38) erkennt und die im Aktivzustand der Rückfahreinrichtung (30) permanent den Soll-Anhängerlenkwinkel (ALW-SOLL) liefert, derart, dass das Gespann (1) mit Rückwärtsfahrt der Fahrbahnmarkierung (38) bis zum Zielort (40) folgt,
- **dass** eine Antriebsstrang-Schnittstellenanordnung (28) vorgesehen ist, an welche die Bahnerkennungseinrichtung (37), die Rückfahreinrichtung (30), die Bedieneinrichtung (26) und die Steuereinrichtung (29) angeschlossen sind.

12. Steuerungssystem nach einem der Ansprüche 1 bis 11,
**dadurch gekennzeichnet,**
**dass** eine optische Zielerkennungseinrichtung (42) vorgesehen ist, die einen Zielort (40) des Gespanns (11) von weitem erkennt und die im Aktivzustand der Rückfahreinrichtung (30) permanent den Soll-Anhängerlenkwinkel (ALW-Soll) liefert, derart, dass das Gespann (1) mit Rückwärtsfahrt den Zielort (40) erreicht.

13. Verfahren zum Steuern eines Fahrzeugs (1), das mit einem elektronisch ansteuerbaren Antriebsstrang (20) ausgestattet ist, der zumindest eine Lenkungsanlage (23), eine Bremsanlage (24) und ein Antriebsaggregat (21) umfasst,
- bei dem eine Bedieneinrichtung (26) aus einem Fahrerwunsch (FW) einen Bewegungsvektor (BV) generiert,
- bei dem eine Steuereinrichtung (29) aus dem Bewegungsvektor (BV) Steuersignale (SS) generiert,
- bei dem der Antriebsstrang (20) die Steuersignale (SS) zur Umsetzung des Fahrerwunsches (FW) abarbeitet,
**dadurch gekennzeichnet,**
- **dass** ein Anhängerlenkwinkel-Istwertgeber (13) einen Ist-Anhängerlenkwinkel (ALW-IST) einer zur Lenkung des Anhängers (3) dienenden Radachse (7; 5) ermittelt,
- **dass** über einen Anhängerlenkwinkel-Sollwertgeber (32; 27₂₃) ein Soll-Anhängerlenkwinkel (ALW-SOLL) eingegeben wird,
- **dass** eine Rückfahreinrichtung aus dem Ist-Anhängerlenkwinkel (ALW-IST) und dem Soll-Anhängerlenkwinkel (ALW-SOLL) einen modifizierten Soll-Zugfahrzeuglenkwinkel (ZLW-SOLL') einer zur Lenkung des Zugfahrzeugs (2) dienen Radachse (4) ermittelt,
- **dass** der modifizierte Soll-Zugfahrzeuglenkwinkel (ZLW-SOLL') im Aktivzustand der Rückfahreinrichtung (30) in einem modifiziertem Bewegungsvektor (BV') an die Stelle des tatsächlichen Soll-Zugfahrzeuglenkwinkels (ZLW-SOLL) tritt,
- **dass** der modifizierte Bewegungsvektor (BV') bei Fahrt des Gespanns (1) den Ist-Anhängerlenkwinkel (ALW-IST) in den Soll-Anhängerlenkwinkel (ALW-SOLL) überführt, wenn der modifizierte Bewegungsvektor (BV') abgearbeitet wird.

14. Verfahren nach Anspruch 13 **gekennzeichnet durch** die kennzeichnenden Merkmale wenigstens eines der Ansprüche 1 bis 12.
